# FASCICULE DE BREVET EUROPEEN

(11) **EP 2 655 052 B1**
(45) Date de publication et mention de la délivrance du brevet: **16.03.2016**
(21) Numéro de dépôt: 11811535.1
(22) Date de dépôt: 20.12.2011
(51) Int. Cl.: B30B 15/30, B29C 43/00

(54) **ENSEMBLE POUR PASTILLEUSE**
ANORDNUNG FÜR EINER PELLETPRESSE
ASSEMBLY FOR A PELLETING PRESS

(30) Priorité: 22.12.2010 FR 1061013
(43) Date de publication de la demande: 30.10.2013
(73) Titulaire: Areva NC, 75009 Paris (FR)
(72) Inventeur: DUCHER, Roland, F-30330 Gaujac (FR); JOUVE, Sylvère, F-30290 Saint Victor La Coste (FR)
(74) Mandataire: Ahner, Philippe
(86) Numéro de dépôt international: PCT/EP2011/073333
(87) Numéro de publication internationale: WO 2012/084893

(56) Documents cités:
- WO-A1-02/07939
- DE-A1-102006 001 626
- FR-A1- 2 624 485
- FR-A1- 2 892 051
- JP-A- 2001 252 791

## Description

### DOMAINE TECHNIQUE ET ART ANTERIEUR

La présente invention se rapporte à un ensemble pour la fabrication de pastilles à partir de poudre selon le préambule de la revendication 1, par exemple utilisé pour la fabrication de pastilles de combustible nucléaire, par exemple de type MOX (mélange d'oxyde de plutonium et d'oxyde d'uranium).

La fabrication de pastilles de combustible nucléaire comporte les étapes suivantes :
- remplissage d'un moule ou matrice ayant la forme d'une pastille, à l'aide d'un distributeur,
- déplacement du distributeur de manière à libérer le moule ainsi rempli,
- puis pressage par l'intermédiaire d'un premier et d'un deuxième poinçon pénétrant dans le moule,
- évacuation des pastilles.

Un tel distributeur, appelé également sabot de moulage, est par exemple décrit dans le document FR 2892051. Ce sabot comporte des moyens assurant une fabrication de pastilles ayant des caractéristiques homogènes et permettant de réduire le temps de cycle de fabrication des pastilles de combustible nucléaire.

Ce sabot offre une grande satisfaction dans la fabrication des pastilles de combustible nucléaire.

Le distributeur nécessite d'être maintenu plaqué sur la table lors de son déplacement au-dessus des matrices. Ce plaquage est généralement obtenu au moyen de vérins pneumatiques. Le distributeur est alors de structure complexe, ce qui le rend relativement encombrant. En outre, le déplacement du sabot est guidé au moyen de deux glissières dans lesquelles coulisse le sabot. Or, de la poudre peut s'échapper du sabot et remplir les glissières, ce qui peut provoquer un coincement du sabot.

Il est rappelé que cette opération se fait en boîte à gant. On recherche donc à réduire l'encombrement des dispositifs mis en oeuvre. En outre, les vérins sont alimentés en fluide pneumatique sous pression, ce qui requiert une alimentation externe à la boîte à gant.

### EXPOSÉ DE L'INVENTION

C'est par conséquent un but de la présente invention d'offrir un distributeur de poudre dans des matrices de moulage, par exemple pour fabriquer des pastilles de combustible nucléaire, de réalisation plus simple que celle des distributeurs existants.

Le but précédemment énoncé est atteint par un système de remplissage d'au moins une matrice de moulage comportant un distributeur de poudre et une table munie de matrices à remplir avec de la poudre, sur laquelle se déplace le distributeur. Le distributeur comporte deux ensembles de galets coopérant avec des rails fixés sur la table de part et d'autre de la zone de déplacement du distributeur, un ensemble de galets servant au guidage du déplacement du sabot et un ensemble de galets servant au plaquage du distributeur sur la table. La table comporte des chemins de roulement pour les galets, par exemple des rails disposés de part et d'autre des matrices orientées dans la direction de déplacement du distributeur.

Les moyens pour guider en déplacement le sabot et les moyens pour plaquer le sabot sur la table sont portés uniquement par le distributeur et la table, ils présentent alors un encombrement réduit. En outre, ils sont de réalisation relativement simple.

La présente invention a alors principalement pour objet un ensemble pour la fabrication de pastilles à partir d'un matériau en poudre selon la revendication 1.

L'ensemble comporte avantageusement deux rails fixés sur la table de part et d'autre du distributeur et portant le chemin de roulement de plaquage et le chemin de roulement de guidage.

Chaque rail présente par exemple une section transversale en C dont l'ouverture est orientée vers le distributeur, la section transversale comportant une branche inférieure pour la fixation du rail sur la table et une branche supérieure portant les chemins de roulement de plaquage et de guidage.

De manière avantageuse, l'ensemble comporte des moyens de réglage du niveau de plaquage du distributeur sur la table. Ces moyens de réglage peuvent comporter un moyen élastique monté en réaction entre deux galets de plaquage d'une paroi latérale et un moyen élastique monté en réaction entre les deux galets de plaquage de l'autre paroi latérale et des moyens aptes à modifier la précontrainte de chacun des moyens élastiques. Par exemple, chaque galet de plaquage est monté articulé en rotation sur une pièce qui est montée articulée en rotation sur la paroi latérale autour d'un axe de rotation parallèle à l'axe de rotation du galet de plaquage et distinct de celui-ci, chaque moyen élastique étant monté en appui entre les pièces portant les galets de plaquage, des moyens de liaison de longueur variable reliant les deux pièces pour régler la précontrainte des moyens élastiques.

Les moyens de liaison de longueur variable peuvent comporter des tiges filetées reliant les deux pièces, chaque moyen élastique étant monté autour d'une tige filetée, lesdites tiges filetées coopérant par vissage avec les pièces portant les galets.

De préférence, le couvercle comporte deux bords d'extrémité biseautés, une des parois d'extrémité du distributeur comportant au moins un bec biseauté sous lequel est logé l'un des bords d'extrémité biseauté du couvercle et l'autre paroi d'extrémité comporte une partie fixe et une partie amovible munie d'au moins un bec biseauté destiné à venir appuyer sur l'autre extrémité biseautée du couvercle.

La partie fixe peut avantageusement comporter des vis et la partie amovible est munie de boutonnières recevant les vis.

Dans exemple de réalisation, la table comporte plusieurs matrices et le distributeur comporte des moyens pour regrouper la poudre le long d'axes distincts sensiblement parallèles à la direction de déplacement, pour remplir des matrices, chaque matrice étant disposée sur un axe de regroupement, les moyens de regroupement étant portés par des parois du boîtier perpendiculaires à la direction de déplacement et ayant une section en dents de scie selon un plan parallèle au plan de déplacement.

L'ensemble comporte de préférence des moyens de regroupement aval et des moyens de regroupement amont selon la direction de déplacement.

Les matrices peuvent être disposées selon au moins une rangée, dans lequel les moyens de regroupement aval sont décalés transversalement par rapport aux moyens de regroupement amont d'une demi largeur de dent, de manière à ce qu'une pointe de dent soit en regard d'un fond entre deux dents consécutives, et dans lequel la distance séparant les matrices est égale à la distance séparant les fonds des dents, le distributeur étant disposé sur la table de manière à ce que lors de son déplacement, chaque fond entre deux dents recouvre une matrice de la table.

Le dispositif de fabrication de pastilles peut comporter un ensemble selon la présente invention, un actionneur de déplacement du distributeur selon un mouvement de va et vient le long de la première direction de déplacement, une trémie destinée à contenir un matériau en poudre, et des moyens d'acheminement (du matériau en poudre de la trémie au distributeur.

L'actionneur est relié au distributeur avantageusement par une liaison rotule.

Les moyens d'acheminement du matériau en poudre peuvent comporter au moins un conduit connecté au couvercle et à la trémie, le conduit comportant un tuyau formé de spires en métal noyées dans un matériau synthétique, et des connecteurs à chacune de ses extrémités. Les connecteurs sont par exemple solidarisés au couvercle et à la trémie au moyen de colliers articulés à boulon.

Le collier articulé à boulon solidarisé à l'un des connecteurs du conduit avec la trémie peut être monté sur un étrier articulé en rotation sur ledit connecteur.

De préférence, l'articulation en rotation de l'étrier sur ledit connecteur comporte un jeu selon l'axe du connecteur et un jeu transversal.

Le dispositif de fabrication selon l'invention peut comporter plusieurs conduits d'alimentation entre la trémie et le distributeur.

Le dispositif de fabrication de pastille est particulièrement adapté à la fabrication de pastilles de combustible nucléaire.

### BRÈVE DESCRIPTION DES DESSINS

La présente invention sera mieux comprise à l'aide de la description qui va suivre et des dessins en annexe sur lesquels :
- la figure 1 est une représentation schématique d'un dispositif de fabrication de pastilles de combustible nucléaire,
- la figure 2 est une vue de dessus d'un exemple de réalisation d'un ensemble distributeur de poudre et table selon la présente invention,
- la figure 3 est une vue de côté du distributeur de la figure 2,
- la figure 4 est une vue en coupe selon le plan AA de la figure 3,
- la figure 5 est une vue en coupe selon la plan BB de la figure 3,
- la figure 6 est une vue en coupe selon la plan CC de la figure 3,
- la figure 7 est une vue en coupe longitudinale du distributeur de la figure 2 selon le plan DD,
- la figure 8 est une vue de dessus d'un exemple de réalisation d'un collier de serrage articulé à boulon pouvant être utilisé pour connecter les conduits d'alimentation au distributeur et/ou à la trémie,
- la figure 9A est une vue de face de la connexion entre la trémie et le conduit d'alimentation relié au distributeur,
- la figure 9B est une vue de dessus et de côté de l'étrier seul mis en oeuvre dans la connexion de la figure 9A,
- la figure 10 est une vue de dessus du distributeur, le couvercle ayant été retiré.

### EXPOSÉ DÉTAILLÉ DE MODES DE RÉALISATION PARTICULIERS

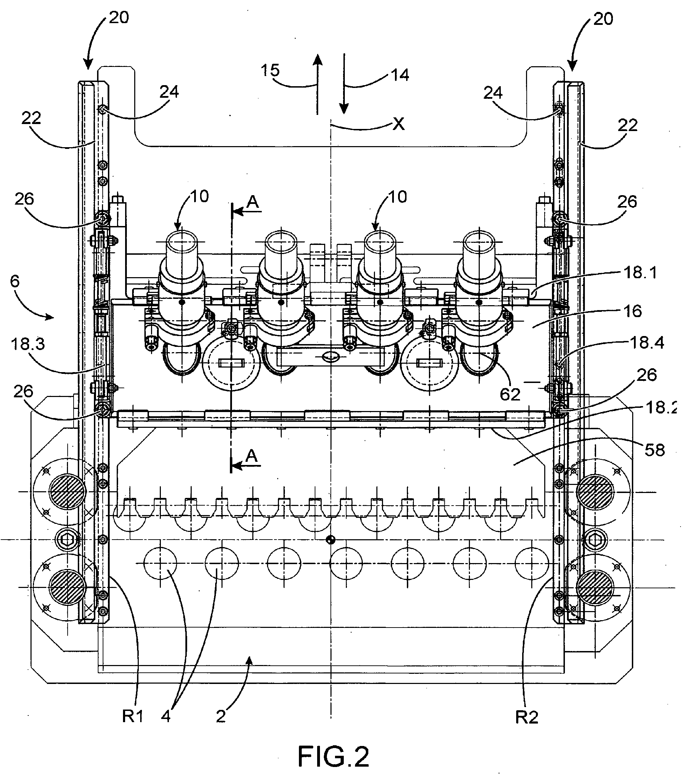

Dans la description qui suit, les termes " sabot " et " distributeur " sont utilisés indistinctement. On entend en outre par "avant" et "arrière" les parties situées respectivement à gauche et à droite sur la représentation de la figure 2.

La description qui suit décrit l'invention mise en oeuvre pour la fabrication de pastilles de combustible nucléaire ; cependant, l'invention s'applique à la fabrication de pastilles de tout type et en tout matériau. La présente invention ne se limite pas à l'industrie nucléaire.

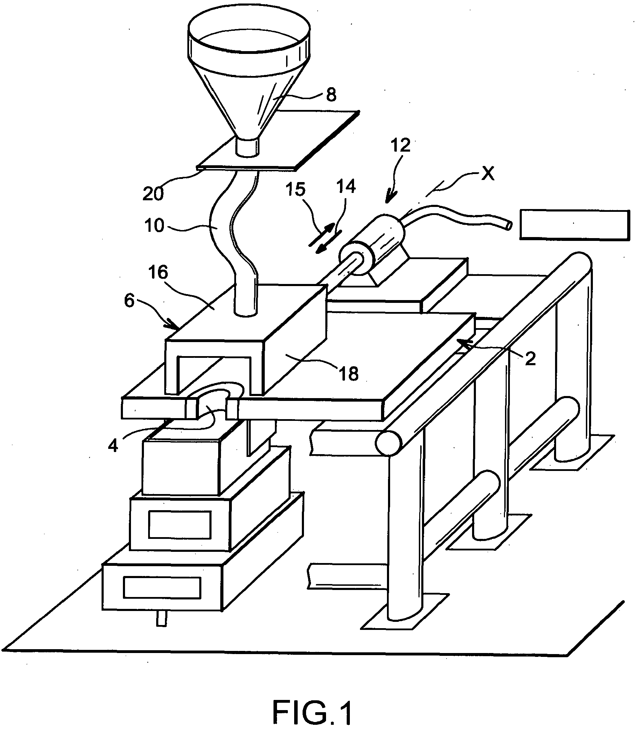

Sur la figure 1, on peut voir, représenté de manière schématique, un dispositif de fabrication de pastilles comportant une table 2 munie d'au moins une matrice 4 munie d'un orifice dans lequel sera disposée la poudre à presser, un sabot ou distributeur 6 de poudre destiné à se déplacer au-dessus de la matrice 4, une trémie d'alimentation 8 raccordée au sabot par l'intermédiaire d'un tuyau 10 et un moyen 12 de déplacement du sabot 6 selon un axe X, ce moyen 12 appliquant avantageusement un mouvement de va et vient selon les flèches 14 et 15.

Le sabot 6 est formé par un boîtier comportant un couvercle 16 et des parois, le tuyau 10 étant connecté au couvercle 16.

La poudre contenue dans la trémie 8 s'écoule dans le tuyau 10 pour arriver dans le sabot 6. Le sabot 6, sous l'action du moyen 12 de déplacement, a un mouvement longitudinal le long de l'axe X de va et vient selon les flèches 14 et 15 et distribue la poudre dans la matrice 4. Une vanne (non représentée) est prévue pour contrôler l'écoulement de la poudre entre la trémie et le distributeur.

Sur la figure 2, on peut voir une représentation détaillée d'un exemple de réalisation d'un ensemble sabot et table selon la présente invention. Le boîtier comporte des parois 18.1 et 18.2 perpendiculaires à l'axe X, la paroi 18.2 dite paroi avant précédant la paroi 18.1 dite paroi arrière dans le sens indiqué par la flèche 14 et des parois latérales 18.3, 18.4 parallèles à la direction X, raccordent ensemble les extrémités des parois avant 18.1 et arrière 18.2 respectivement.

Le sabot 6 est destiné à se déplacer sur la table 2 selon l'axe X, entre une position reculée extrême dans laquelle le sabot ne recouvre pas les matrices 4, et une position extrême avancée, permettant l'évacuation de pastilles.

Dans l'exemple représenté, la table 2 comporte 14 matrices réparties selon deux rangées sensiblement perpendiculaires à l'axe X. Dans l'exemple représenté, les matrices sont de section circulaire; toute autre forme peut être prise par les matrices en fonction du type de pastilles à mouler.

La table 2 est avantageusement mobile selon une direction perpendiculaire au plan de la table.

Dans l'exemple de réalisation, quatre tuyaux d'alimentation 10 en poudre sont connectés au couvercle 16, assurant une alimentation homogène de la poudre dans le distributeur 6.

L'ensemble comporte des moyens 20 de guidage du sabot 6 le long de l'axe X et de plaquage du sabot 6 sur la table 2. Dans l'exemple représenté, les moyens 20 comportent deux rails 22 fixés sur la surface de la table 2 parallèlement à l'axe X de part et d'autre des matrices 4. Les rails sont écartés l'un de l'autre sensiblement de la largeur du sabot, mesurée perpendiculairement à l'axe X. Les rails 22 sont fixés sur la table par exemple au moyen de vis 24.

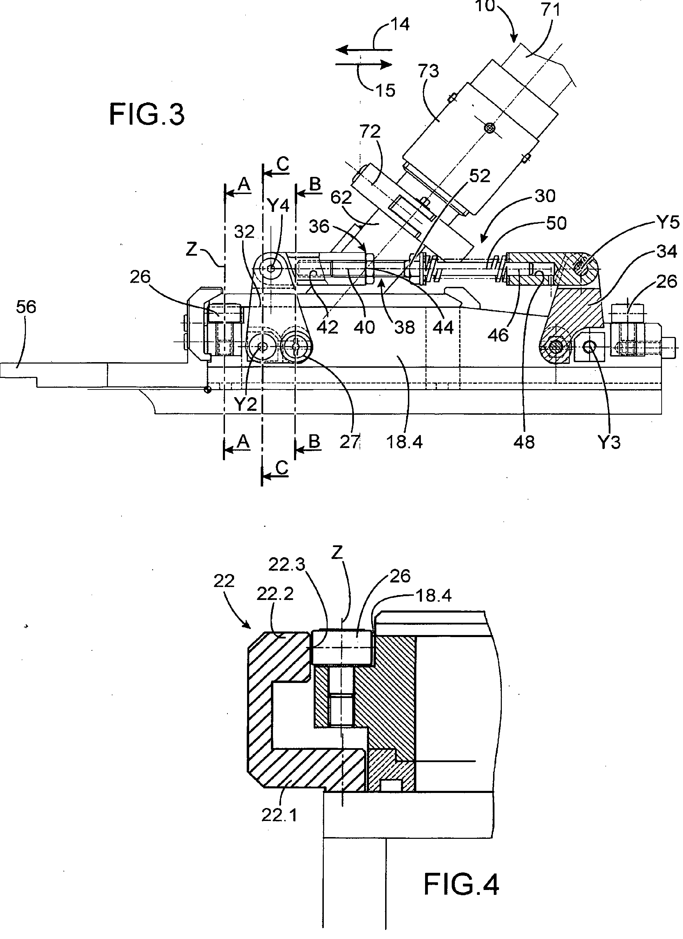

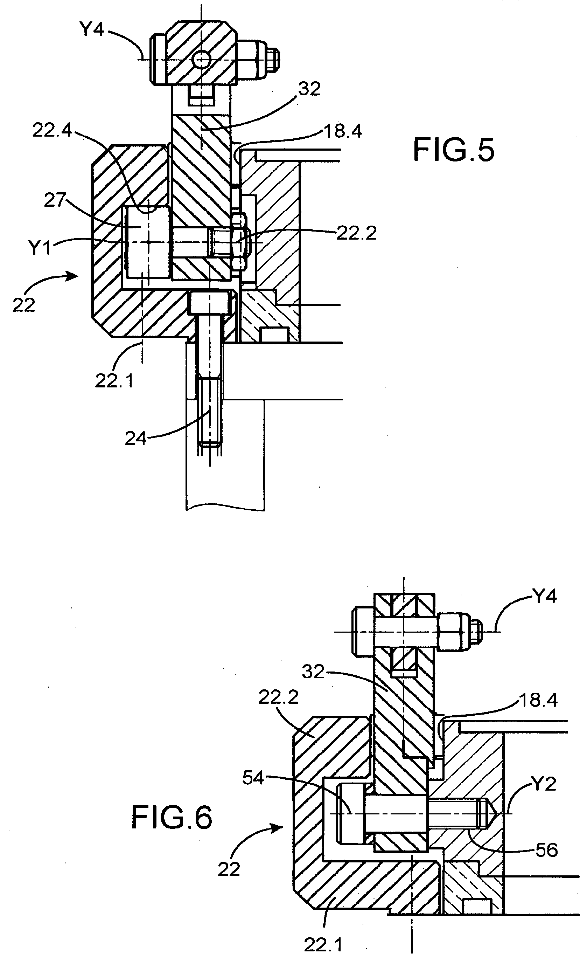

Sur les figures 4 et 5, on peut voir une section transversale de l'un des rails 22 ; celle-ci a sensiblement la forme d'un C, dont l'ouverture fait face à une paroi latérale 18.4 du sabot dans la représentation des figures 4 à 6.

La branche inférieure 22.1 du C comporte au niveau de son extrémité libre des alésages pour la fixation du rail sur la table au moyen de vis 24. De préférence, et comme cela est représenté, la branche inférieure a une profondeur supérieure à celle de la branche supérieure 22.2 permettant une fixation aisée du rail 22 sur la table 2.

D'autres types de fixation des rails 22 sur la table 2 sont envisageables, par exemple une fixation par soudage.

Les moyens de guidage et de plaquage 20 comportent deux ensembles de galets, un premier ensemble destiné à assurer le guidage du sabot le long de l'axe X en coopérant avec les rails 22, et un deuxième ensemble destiné à assurer le plaquage du sabot 6 sur la surface de la table 2 en coopérant avec les rails 22.

Le premier ensemble de galets comporte deux paires de galets 26, deux galets 26 étant disposés sur chaque bord latéral 18.3, 18.4 du sabot 6. De préférence, un galet 26 est monté au niveau de l'extrémité avant de la paroi latérale 18.3, 18.4 et un galet 26 est monté au niveau de l'extrémité arrière de la paroi latérale 18.3, 18.4.

Sur la figure 4, on peut voir en détail un galet de guidage 26 du premier ensemble en appui sur un rail 22. Les galets de guidage 26 ont un axe de rotation Z perpendiculaire au plan de la table 2. Le chemin de roulement de guidage des galets de guidage 26 est porté par une face latérale 22.3 de la branche supérieure 22.2 contenue dans un plan perpendiculaire à la table.

Les deux galets de guidage arrière sont de préférence situés dans un même plan perpendiculaire à l'axe X, et les deux galets de guidage avant sont également de préférence situés dans un même plan perpendiculaire à l'axe X. Cette disposition simplifie la fabrication. En outre, le guidage est amélioré. Ce guidage longitudinal du sabot 6 par appui latéral permet d'éviter les risques de coincement dû à la présence de poudre.

Le deuxième ensemble de galets comporte des galets de plaquage 27, deux galets 27 étant disposés sur chaque paroi latérale 18.3, 18.4 du sabot 6. De préférence, un galet de plaquage 27 est monté au niveau de l'extrémité avant de la paroi latérale 18.3, 18.4 et un galet 27 est monté au niveau de l'extrémité arrière de la paroi latérale 18.3, 18.4.

Dans la représentation de la figure 3, les galets de guidage 26 sont avantageusement disposés plus à l'extérieur que les galets de plaquage 27, ce qui permet de simplifier la forme des rails. Mais cette disposition n'est pas limitative. Par exemple, on pourrait prévoir de disposer un ou plusieurs galets de guidage entre les deux galets de plaquage.

Sur la figure 5, on peut voir en détail un galet 27 du deuxième ensemble en appui sur un rail 22. Les galets de plaquage 27 ont un axe de rotation Y1 parallèle au plan de la table et perpendiculaire à l'axe longitudinal X. Le chemin de roulement de plaquage est formé par une face intérieure 22.4 de la branche supérieure 22.2 du rail 22.

La forme des rails pourrait être différente. Par exemple les rails pourraient avoir une section en S de sorte que la branche inférieure soit située à l'extérieur de l'espace délimité entre les deux rails 22, puisque seule la branche supérieure sert pour le guidage et le plaquage.

En outre, des moyens de réglage 30 du niveau de plaquage du sabot sur la surface de la table sont avantageusement prévus. Les moyens de réglage 30 sont particulièrement visibles sur la figure 3.

Des moyens de réglage 30 distincts sont prévus pour chaque paire de galets latéraux. Les moyens de réglage étant similaires, nous ne décrirons que les moyens de réglage situés sur le côté droit du sabot dans la représentation de la figure 2.

Les moyens de réglage 30 sont destinés à faire varier l'effort de plaquage du sabot sur la table au moyen d'un ressort dont la précontrainte est ajustée en fonction du niveau de plaquage souhaité.

Les moyens de réglage 30 forment des systèmes de type excentrique.

Dans l'exemple représenté, chaque galet de plaquage 27 d'une paroi latérale 18.3, 18.4 est monté articulé sur une pièce mobile en rotation 32, 34 autour d'un axe Y2, Y3 respectivement, parallèle et distinct de l'axe de rotation des galets de plaquage 27.

Dans l'exemple représenté, les pièces 32 34 ont sensiblement la forme de triangle, un angle portant un galet 27, un angle étant articulé en rotation sur le sabot et un angle sur lequel sont articulés les moyens de réglage. En modifiant l'orientation angulaire des pièces 32, 34, on augmente ou on diminue la précontrainte des ressorts et on fait varier l'effort de plaquage du sabot sur la table.

Des moyens de connexion 36 de longueur variable relient les deux pièces 32, 34. En modifiant la longueur des moyens de connexion 36, les pièces 32, 34 pivotent autour de leur axe, ce qui modifie la tension du ressort.

L'axe de rotation Y2 de la pièce 32 est situé du côté du bord avant du sabot 6 et l'axe de rotation Y3 de la pièce 34 est situé du côté du bord arrière du sabot. Ainsi, lorsque la longueur de moyens de connexion 36 est modifiée, les pièces 32, 34 pivotent dans des sens contraires et les galets 27 se déplacent verticalement dans le même sens.

En variante, les axes de rotation des pièces 32, 34 pourraient être situés à l'intérieur par rapport aux galets 27.

Les moyens de connexion 36 sont montés articulés en rotation autour d'axes parallèles aux axes Y4, Y5. Les moyens de connexion 36 comportent une tige 38 munie d'une portion d'extrémité filetée 40 qui est vissée dans un alésage taraudé 42 formé dans la pièce 32, un contre-écrou 44 pour bloquer la rotation de la tige 38 dans l'alésage 42. La tige 38 comporte une deuxième portion d'extrémité 46 montée dans un alésage 48 de la pièce 34. La portion d'extrémité 46 est apte à coulisser dans l'alésage 48 qui est par exemple équipé de douilles de frottement. Le ressort 50 est monté en réaction entre la pièce 34 et un écrou 52 monté sur la tige 38.

C'est la valeur de contrainte des ressorts 50 des deux moyens de réglage qui détermine l'effort de plaquage du sabot sur la table. En augmentant l'effort de plaquage, on augmente l'étanchéité et on augmente également les efforts de mise en mouvement. Un compromis est alors choisi entre le niveau d'étanchéité du coulissement du sabot sur la table et l'effort nécessaire au déplacement du sabot sur la table. Ces moyens de réglage sont de construction relativement simple et sont très robustes.

Le sabot glisse sur la table et est guidé par son contact sur la table. Celui-ci n'est pas supporté par des galets roulant sur des rails, ce qui rend la structure de l'installation moins complexe et le plaquage peut être réglé de manière simple.

Les moyens de réglage permettent un réglage facilité à distance. De manière très avantageuse dans l'exemple représenté, le réglage se fait en manipulant uniquement l'écrou 52 pour régler les deux galets d'un même côté simultanément, ce qui est particulièrement intéressant dans le cas d'une installation nucléaire en boîte à gant.

Sur la figure 6, on peut voir en détail les axes de rotation Y2, Y3 des pièces 32, 34. Ceux-ci sont formés par des vis 54 dont une extrémité est fixée dans un alésage 56 du bord latéral du sabot. Les pièces 32, 34 sont montées autour d'une partie intermédiaire des vis, les têtes de vis formant butées latérales. Les têtes sont logées à l'intérieur du rail 22 sans interaction avec celui-ci.

Le sabot est déplacé le long de l'axe X selon un mouvement alternatif de gauche à droite en considérant la représentation de la figure 2. Avantageusement ce mouvement est imprimé par un vérin électrique relié par une extrémité à l'extrémité arrière du sabot 6. La mise en oeuvre d'un autre type d'actionneur, par exemple un actionneur hydraulique ne sort pas du cadre de la présente invention.

De manière avantageuse, une liaison rotule est prévue entre le vérin et le sabot. Une liaison rotule est également avantageusement prévue entre le vérin et le bâti du dispositif de fabrication des pastilles.

Dans l'exemple représenté en référence à la figure 2, le sabot 6 comporte une pièce en forme de peigne 58 fixée sur la paroi avant du boîtier. Le peigne 58 est destiné à pousser les pastilles éjectées des matrices pour les amener sur un convoyeur (non représenté) circulant le long de la table. Le convoyeur est destiné à amener les pastilles vers un four de frittage.

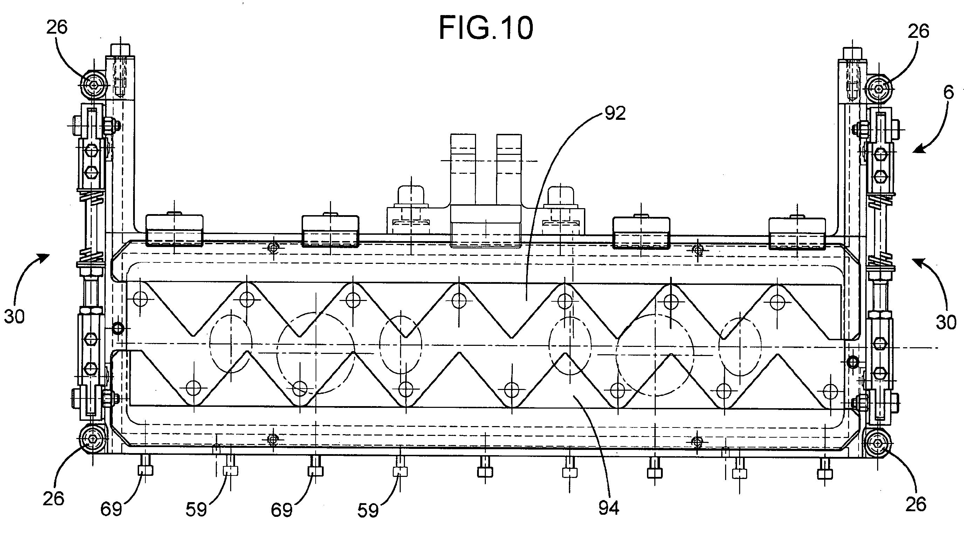

Ce peigne 58 est fixé de manière amovible sur la paroi avant 18.2 au moyen de vis 59. De préférence, le peigne 58 comporte des boutonnières (non visibles) dans lesquelles sont montées les vis 59 (figure 10) évitant de devoir retirer les vis, un simple desserrage des vis suffit au retrait du peigne.

Le couvercle 16 du sabot est formé par une plaque 60 munie de connecteurs 62 auxquels sont raccordés les conduits d'alimentation 10.

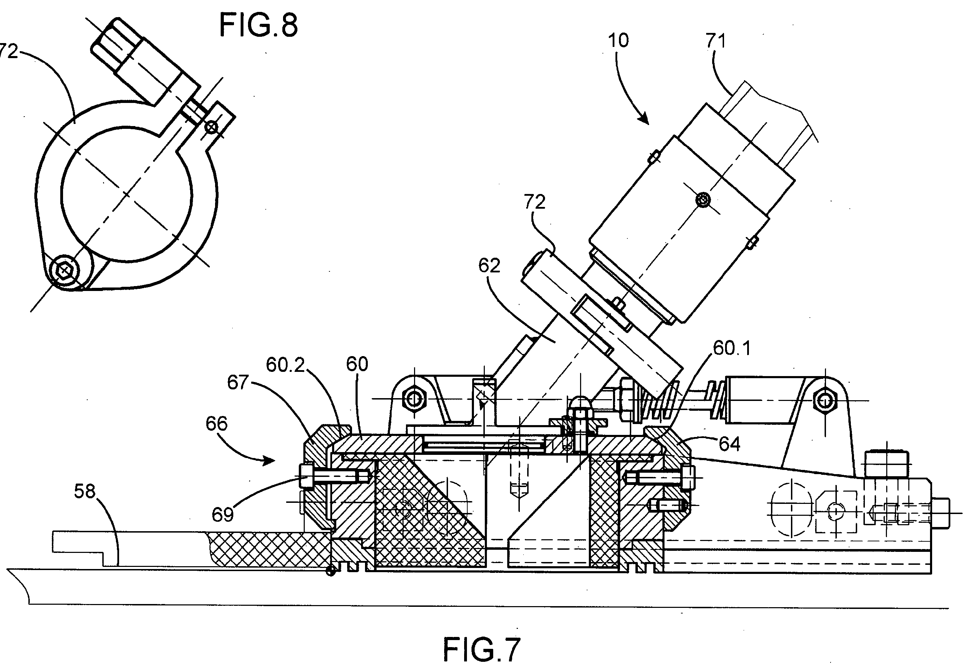

Dans l'exemple avantageux représenté plus particulièrement visible sur la figure 7, la plaque 60 du couvercle 16 est maintenue par serrage sur les parois latérales 18.3, 18.4 du boîtier du sabot. La plaque 60 comporte des bords arrière 60.1 et avant 60.2 biseautés. L'extrémité supérieure de la paroi arrière 18.1 du boîtier comporte une pluralité de taquets 64 formant des becs sous lesquels le bord arrière biseauté 60.2 est logé. Les taquets 64 forment ainsi une butée arrière pour le couvercle 16. On pourrait prévoir de remplacer les taquets par une seule pièce s'étendant sur toute la largeur du boîtier.

En face avant, une pièce de serrage 66 amovible est prévue munie également d'un bec 67 formant son bord supérieur. Le bec 67 vient en appui sur le bord avant biseauté 60.2 de la plaque 60.

La pièce de serrage 66 est par exemple montée sur la paroi avant du boîtier au moyen de vis 69 vissées dans la paroi et pénétrant dans des boutonnières (non visibles) formées dans la pièce de serrage 66.

Ce montage assure à la fois le serrage de la plaque contre les taquets arrière 64 et contre la paroi avant du boîtier. Le montage et démontage du couvercle 16 sont relativement rapides, puisqu'ils ne requièrent que le desserrage des vis 69 facilement accessibles, par rapport à une fixation du couvercle au moyen de vis vissées directement dans la plaque 60 sur tout son contour.

De manière avantageuse, chaque conduit d'alimentation 10 comporte un tuyau 71, de préférence à spires aciers enrobés dans un matériau synthétique, type PVC, qui ne présente pas de risque de pincement, par exemple en cas de dépression. Le risque de rupture du tuyau est donc réduit de manière importante.

Par exemple, chaque conduit est connecté au sabot au moyen d'un collier 72, de type collier articulé à boulon, tel que celui représenté seul sur la figure 8. Le conduit 10 comporte un manchon de connexion 73 monté sur le tuyau, le collier 72 enserrant le manchon de connexion 73 et l'embout de connexion 62 solidaire du couvercle 16. D'autres moyens de connexion sont envisageables.

Les conduits d'alimentation sont connectés à la trémie. De préférence, il s'agit également de colliers articulés à boulon. Ceux-ci peuvent être du même type que ceux connectant les conduits au sabot.

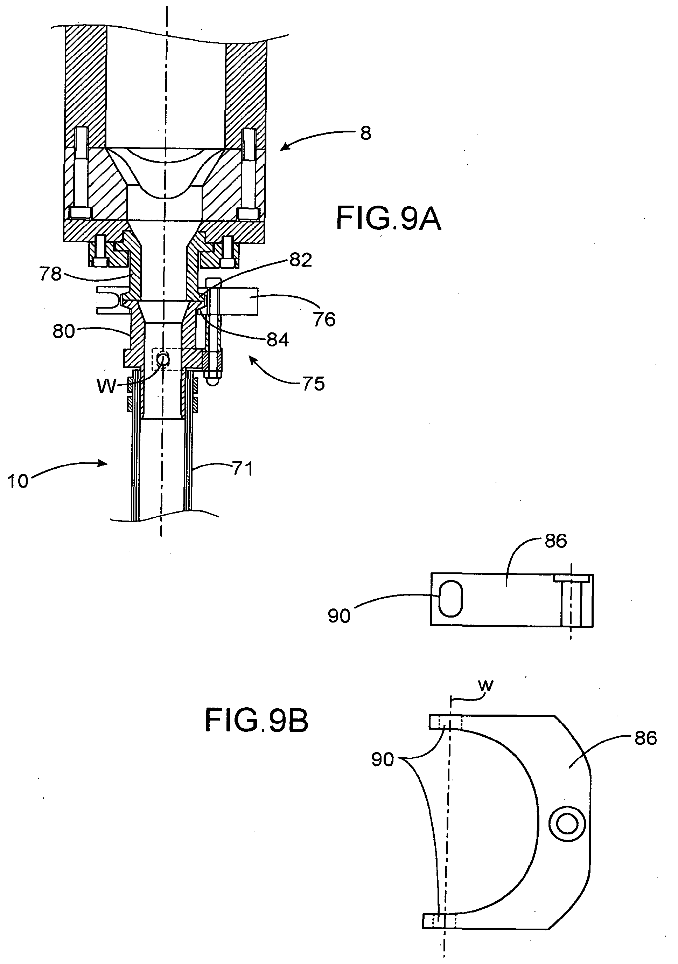

De préférence, comme cela est représenté sur la figure 9A, chaque conduit est solidarisé à la trémie au moyen d'un dispositif de serrage 75 articulé sur le conduit. Le dispositif de serrage 75 comporte un collier de serrage 76 articulé à boulon similaire au collier de la figure 8 et un étrier de montage 86 du collier 76 sur le conduit, représenté seul sur la figure 9B. Ainsi, le collier de serrage 76 est amené en même temps que le conduit 10. Il est rappelé que l'ensemble du dispositif de fabrication des pastilles est dans une boîte à gant dont l'intérieur n'est accessible que par l'intermédiaire de ronds de gant, et la fixation des conduits sur la trémie est réalisée d'une main à bout de bras.

La trémie comporte dans son fond inférieur des embouts de connexion 78 en saillie vers l'extérieur auxquels sont solidarisés des manchons 80 montés dans le tuyau.

L'extrémité de l'embout de connexion 78 et l'extrémité du manchon 80 destinées à être en contact comportent chacune une collerette annulaire 82, 84 destinées à être maintenues l'une contre l'autre au moyen du collier 76. De préférence les collerettes sont coniques et la gorge du collier est de formes correspondantes, assurant un centrage automatique du manchon de connexion et de l'embout de connexion.

L'étrier 86 est monté articulé en rotation sur le manchon de connexion 80 autour d'un axe W perpendiculaire à l'axe du manchon de connexion 80. L'axe d'articulation des deux parties articulées du collier 76 est monté dans l'étrier 86. Ainsi, les deux parties du collier sont articulées sur l'étrier 86.

L'axe de rotation W de l'étrier 86 sur le manchon de connexion 80 est formé par deux pions montés dans deux alésages borgnes réalisés dans le manchon de connexion 80. De préférence, l'étrier 86 est monté articulé sur le manchon 80 avec jeu. On prévoit un jeu selon l'axe du manchon de connexion 80. Ce jeu est obtenu en montant les pions dans des alésages 90 oblongs réalisés dans l'étrier 86. Un jeu radial est également prévu au niveau de l'axe de rotation de l'étrier sur le manchon de connexion 80.

La connexion des conduits d'alimentation sur la trémie est simplifiée et plus aisée.

Dans l'exemple représenté sur la figure 10, le sabot 6 comporte des plaques intérieures 92, 94 munies de moyens pour regrouper la poudre le long de chemins distincts, de manière à déplacer et à solliciter la poudre en direction de chaque matrice par une surface de sabot importante. Ceci permet de réduire l'adhésion de la poudre et son adhérence aux parois. Les plaques ont un profil en dent de scie ce qui permet de regrouper la poudre le long de chemins parallèles à l'axe X passant par le fond situé entre deux dents, ces chemins croisant une matrice 4.

L'extrémité des dents de scie peut être plus ou moins arrondie. Les fonds sont avantageusement délimités par un arc de cercle, évitant une rétention de poudre.

De manière avantageuse, la plaque 92 a les mêmes dimensions que la plaque 94.

La plaque 94 est en regard de la plaque 92. Avantageusement, les dents de la plaque 94 sont décalées selon l'axe Y par rapport aux dents de la plaque 92. Avantageusement, le décalage est d'une demi-largeur de dent.

Dans l'exemple représenté, le profil de la plaque 92 et de la plaque 94 sont complémentaires.

De manière avantageuse, les plaques 92, 94 sont amovibles et fixées à l'intérieur du boîtier. Ainsi, leur remplacement ne nécessite pas un remplacement du sabot en entier. A cet effet, la paroi supérieure du boîtier est également amovible.

Le boîtier est par exemple réalisé en acier inox et les moyens de regroupement, par exemple en polymère.

Le sabot selon la présente invention est donc de conception plus simple.

Avantageusement, les faces intérieures du sabot sont en inox poli miroir, ce qui limite la rétention de la poudre à l'intérieur du sabot et les risques de tassement de la poudre. On obtient alors un remplissage efficace des première et deuxième rangées avec des débits augmentés.

Le sabot, lors du remplissage, se déplace selon un mouvement de va et vient, selon les flèches 14 et 15, le long de l'axe X.

De manière avantageuse la table est montée mobile selon un axe vertical Z, orthogonal à la direction X et à la direction Y. Du fait du montage en rotation du vérin par ces deux extrémités, à la fois sur le sabot et sur le dispositif d'actionnement, le sabot suit entièrement le déplacement de la table.

Le mouvement de va et vient du sabot est avantageusement du type sinusoïdal ou triangulaire.

En utilisant un mode de déplacement de type sinusoïdal, il est possible d'atteindre un débit de l'ordre de 9 grammes de poudre par seconde et l'utilisation d'une loi triangulaire pour le déplacement du sabot permet d'atteindre des débits de l'ordre de 8 grammes par seconde.

Sur un modèle de presse, on définit un axe de secouage et une amplitude de secouage de part et d'autres de cet axe. L'axe de secouage correspond à l'axe central entre les deux rangées de matrices et l'amplitude de secouage assure le recouvrement des matrices par la poudre du sabot. Il est possible en modulant la position de l'axe de secouage, c'est-à-dire en rendant sa position asymétrique relativement au deux rangées de matrices, d'ajuster une éventuelle dissymétrie de remplissage entre la rangée avant et la rangée arrière.

Nous allons détailler le remplissage des matrices de la première rangée R1, le remplissage des matrices de la deuxième rangée R2 s'effectuant de manière symétrique.

Lorsque le sabot se déplace dans le sens 15, le profil en dents de scie des moyens de regroupement rassemble la poudre entre chaque paire de dents, la poudre se déplace le long des dents vers les fonds. Les fonds étant alignés avec des matrices 4 de la première rangée R1, et disposés en arrière de la première rangée R1 avant le remplissage, ceux-ci rencontrent les matrices 4 de la rangée R1, la poudre rassemblée dans les fonds se trouve à un certain moment au droit des matrices 4 de la rangée R1 et tombe dans celles-ci. Le remplissage des matrices se fait d'autant mieux que la poudre est sollicitée de manière importante par les moyens 92 offrant une grande surface pour déplacer la poudre.

Le même phénomène a lieu pour la deuxième rangée R2, lorsque le sabot se déplace dans le sens 15.

Toute la poudre nécessaire à la réalisation d'une pastille ne tombe pas en une seule fois dans chaque matrice, mais le remplissage s'effectue en plusieurs passes grâce au déplacement de va et vient du sabot. Ce remplissage en plusieurs étapes permet d'obtenir une bonne homogénéité de remplissage.

En outre, le mouvement conjugué de va et vient du sabot et de montée de la table crée un phénomène d'aspiration de la poudre vers l'intérieur des matrices. Le poinçon inférieur étant fixe, une montée de la table engendre une augmentation du volume libre des matrices provoquant une aspiration de la poudre.

On peut avantageusement prévoir que les moyens de regroupement soient mobiles par rapport au boîtier, par exemple en prévoyant un dispositif excitateur apte à appliquer des déplacements de faible amplitude de manière à mettre les moyens de regroupement en vibration selon la direction X.

Des moyens de suspension type ressort peuvent avantageusement être associés au dispositif excitateur pour permettre de faire vibrer la poudre dans les basses fréquences et avec une amplitude élevée, assurant une répartition homogène de la poudre sur toute la surface du sabot. Ces mouvements peuvent être combinés ou enchaînés avec des vibrations de plus faible amplitude et/ou avec une fréquence plus faible, visant à « décohésionner » la poudre, pour la fluidifier et remplir convenablement les matrices.

On peut prévoir un excitateur pour chaque plaque ou un seul excitateur pour les deux plaques, les plaques étant par exemple raccordées rigidement.

Le dispositif excitateur comporte, par exemple, un dispositif d'excitation électromagnétique, par exemple un pot vibrant ou est du type excitateur piézoélectrique. L'utilisation de pots vibrants présente l'avantage de permettre de larges plages de fréquence et d'amplitude. Tout type d'excitateur, par exemple de type magnétique peut convenir.

Le dispositif de fabrication de pastilles comporte, comme décrit précédemment, des moyens de commande du déplacement du sabot et également de commande de l'excitateur selon des cycles déterminés de manière à assurer une « répétabilité » du remplissage des matrices. Il peut être prévu des vibrations de forte amplitude en début de cycle puis des vibrations de plus faible amplitude et/ou des vibrations de fréquence variable.

Un procédé de fabrication de pastilles mettant en oeuvre le distributeur va maintenant être décrit.

Le procédé de fabrication comporte les étapes suivantes :
a) mise en place du sabot sur les matrices, le sabot comportant des moyens de regroupement de la poudre selon des axes distincts,
b) remplissage des matrices par secouage des moyens de regroupement,
c) retrait du sabot,
d) compression de la poudre,
e) évacuation des pastilles.

Lors de l'étape b), le boîtier du sabot effectue des mouvements de va et vient (par exemple sept ou huit allers et retours) et/ou les moyens de regroupement sont mis en vibration permettant une répartition uniforme de la poudre et évitent la cohésion des particules de poudre. Lors de ce remplissage, le poinçon inférieur peut être déplacé de manière à provoquer un effet d'aspiration.

Lors de l'étape c), le sabot a un déplacement, sur la table 2 vers l'arrière, de grande amplitude, relativement aux mouvements de va et vient lors du secouage, de manière à libérer complètement les matrices pour l'approche du poinçon supérieur.

Lors de l'étape d), la poudre est pressée entre un poinçon supérieur et un poinçon inférieur pendant un temps déterminé. On peut prévoir une variation de la vitesse de déplacement du poinçon supérieur lors du pressage.

Lors de l'étape e), la table descend provoquant une éjection des pastilles des matrices, puis le sabot effectue un mouvement de grande amplitude vers l'avant pour pousser les pastilles vers un convoyeur disposé à l'extrémité avant de la table.

Le procédé peut comporter une étape supplémentaire de vidange du sabot, celui-ci est alors placé dans une position de vidange, au dessus d'orifices raccordés à des moyens d'aspiration de la poudre restant dans le sabot.

Puis en fin de cycle, le sabot est placé en position de repos en attente.

L'ensemble distributeur et table est particulièrement adapté à la fabrication de pastilles de combustible nucléaire, par exemple à partir de poudre MOX comprenant un mélange de poudres d'oxyde d'uranium, d'oxyde de plutonium et/ou de chamotte.

## Revendications

1. Ensemble pour la fabrication de pastilles à partir d'un matériau en poudre comportant un distributeur (6) de poudre et une table (2) munie de matrices, sur laquelle le distributeur est apte à se déplacer, ledit distributeur de poudre comportant un boîtier comprenant un couvercle (16) muni de moyens de raccord (62) à au moins un conduit d'alimentation (10) en poudre raccordé à une trémie, deux parois latérales (18.3, 18.4) et deux parois d'extrémité (18.1, 18.2), ledit distributeur (6) étant apte à solliciter la poudre dans un mouvement de va et vient sur un plan le long d'une direction de déplacement déterminée (X), ledit ensemble comportant des moyens de guidage du distributeur le long de la direction de déplacement et des moyens de plaquage du distributeur sur la table, **caractérisé en ce que** dans ledit ensemble lesdits moyens de guidage comportent au moins deux galets de guidage (26) montés sur chaque paroi latérale (18.3, 18.4), lesdits galets de guidage (26) ayant des axes de rotation (Z) perpendiculaires à un plan de la table (2), lesdits galets de guidage (26) coopérant avec une chemin de roulement de guidage (22.3) fixe par rapport à la table (2), et dans lequel lesdits moyens de plaquage comportent au moins deux galets de plaquage (27) sur chaque paroi latérale (18.3, 18.4), lesdits galets de plaquage (27) ayant des axes de rotation (Y1) perpendiculaires à la direction de déplacement (X) et parallèles au plan de la table (2), chaque galet de plaquage (27) coopérant avec un chemin de roulement de plaquage (22.4) fixe par rapport à la table (2), lesdits galets de plaquage étant disposés uniquement entre le chemin de roulement de plaquage associé et la table, et étant apte à se déplacer par rapport au chemin de roulement de plaquage en éloignement et en rapprochement, de sorte que le niveau de plaquage est augmenté par déplacement des galets de plaquage en direction du chemin de roulement de plaquage associé.

2. Ensemble selon la revendication 1, comportant deux rails (22) fixés sur la table de part et d'autre du distributeur (6) et portant le chemin de roulement de plaquage (22.4) et le chemin de roulement de guidage (22.3).

3. Ensemble selon la revendication 2, dans lequel chaque rail (22) présente une section transversale en C dont l'ouverture est orientée vers le distributeur (6), la section transversale comportant une branche inférieure (22.1) pour la fixation du rail (22) sur la table (2) et une branche supérieure (22.2) portant les chemins de roulement de plaquage (22.4) et de guidage (22.3).

4. Ensemble selon l'une des revendications 1 à 3, comportant des moyens de réglage (30) du niveau de plaquage du distributeur sur la table.

5. Ensemble selon la revendication 4, dans lequel les moyens de réglage (30) comportent un moyen élastique (50) monté en réaction entre deux galets de plaquage (27) d'une paroi latérale et un moyen élastique (50) monté en réaction entre les deux galets de plaquage (27) de l'autre paroi latérale et des moyens aptes à modifier la précontrainte de chacun des moyens élastiques (50).

6. Ensemble selon la revendication 5, dans lequel chaque galet de plaquage (27) est monté articulé en rotation sur une pièce (32, 34) qui est montée articulée en rotation sur la paroi latérale (18.3, 18.4) autour d'un axe de rotation (Y2, Y3) parallèle à l'axe de rotation (Y1) du galet de plaquage (27) et distinct de celui-ci, chaque moyen élastique (50) étant monté en appui entre les pièces (32, 34) portant les galets de plaquage (27), des moyens de liaison (36) de longueur variable reliant les deux pièces (32, 34) pour régler la précontrainte des moyens élastiques (50).

7. Ensemble selon la revendication 6, dans lequel les moyens de liaison (36) de longueur variable comportent des tiges filetées reliant les deux pièces (32, 34), chaque moyen élastique (50) étant monté autour d'une tige filetée, lesdites tiges filetées coopérant par vissage avec les pièces (32, 34) portant les galets.

8. Ensemble selon l'une des revendications 1 à 7, dans lequel le couvercle (16) comporte deux bords d'extrémité biseautés (60.1, 60.2), une des parois d'extrémité (18.1, 18.2) du distributeur comportant au moins un bec biseauté (64) sous lequel est logé l'un des bords d'extrémité biseauté du couvercle (16) et l'autre paroi d'extrémité comporte une partie fixe et une partie amovible (66) munie d'au moins un bec biseauté (67) destiné à venir appuyer sur l'autre extrémité biseautée du couvercle (16), la partie fixe comportant avantageusement des vis et la partie amovible (66) est munie de boutonnières recevant les vis.

9. Ensemble selon l'une des revendications 1 à 8, dans lequel la table (2) comporte plusieurs matrices (4) et le distributeur (6) comporte des moyens (92, 94) pour regrouper la poudre le long d'axes distincts sensiblement parallèles à la direction de déplacement (X), pour remplir des matrices (4), chaque matrice (4) étant disposée sur un axe de regroupement, les moyens de regroupement (92, 94) étant portés par des parois (18,1,18.2) du boîtier perpendiculaires à la direction de déplacement (X) et ayant une section en dents de scie selon un plan parallèle au plan de déplacement.

10. Ensemble selon la revendication 9, comportant des moyens de regroupement aval (92) et des moyens de regroupement amont (94) selon la direction de déplacement (X) .

11. Ensemble selon la revendication 10, dans lequel les matrices (4) sont disposées selon au moins une rangée (R1, R2), dans lequel les moyens de regroupement aval (92) sont décalés transversalement par rapport aux moyens de regroupement amont (94) d'une demi largeur de dent, de manière à ce qu'une pointe de dent soit en regard d'un fond entre deux dents consécutives, et dans lequel la distance séparant les matrices (4) est égale à la distance séparant les fonds (25) des dents, le distributeur (6) étant disposé sur la table (2) de manière à ce que lors de son déplacement, chaque fond (25) entre deux dents recouvre une matrice (4) de la table (2).

12. Dispositif de fabrication de pastilles comportant un ensemble selon l'une des revendications 1 à 11, un actionneur de déplacement du distributeur selon un mouvement de va et vient le long de la première direction de déplacement (X), une trémie (8) destinée à contenir un matériau en poudre, et des moyens d'acheminement (10) du matériau en poudre de la trémie au distributeur, l'actionneur étant avantageusement relié au distributeur (6) par une liaison rotule.

13. Dispositif de fabrication selon la revendication 12, dans lequel les moyens d'acheminement du matériau en poudre comportent au moins un conduit (10), avantageusement plusieurs conduits, connecté(s) au couvercle (16) et à la trémie (8), le ou les conduit(s) (10) comportant un tuyau (71) formé de spires en métal noyées dans un matériau synthétique, et des connecteurs à chacune de ses ou de leurs extrémités.

14. Dispositif de fabrication selon la revendication 13, les connecteurs (73, 80) étant solidarisés au couvercle et à la trémie au moyen de colliers articulés à boulon (72, 76).

15. Dispositif de fabrication selon la revendication 14, dans lequel le collier articulé à boulon (76) solidarisé à l'un des connecteurs (80) du conduit (10) avec la trémie (8) est monté sur un étrier (86) articulé en rotation sur ledit connecteur (80), l'articulation en rotation de l'étrier (86) sur ledit connecteur (80) comportant avantageusement un jeu selon l'axe du connecteur et un jeu transversal.

16. Dispositif de fabrication de pastille selon l'une des revendications 12 à 15, pour la fabrication de pastilles de combustible nucléaire.

## Patentansprüche

1. Anordnung für die Herstellung von Pastillen ausgehend von einem Pulvermaterial, umfassend einen Pulververteiler (6) und einen mit Gesenken ausgestatteten Tisch (2), auf dem der Verteiler verlagerbar ist, wobei der Pulververteiler ein Gehäuse umfasst, umfassend einen Deckel (16), der mit Mitteln (62) zum Anschließen an wenigstens eine Pulverversorgungsleitung (10) ausgestattet ist, welche an einem Trichter angeschlossen ist, zwei Seitenwände (18.3, 18.4) und zwei Endwände (18.1, 18.2), wobei der Verteiler (6) dazu ausgelegt ist, das Pulver in einer Hin- und Herbewegung in einer Ebene entlang einer vorbestimmten Verlagerungsrichtung (X) anzuziehen, wobei die Anordnung Mittel zur Führung des Verteilers entlang der Verlagerungsrichtung und Mittel zum Andrücken des Verteilers auf dem Tisch umfasst, **dadurch gekennzeichnet, dass** bei der Anordnung die Führungsmittel wenigstens zwei Führungsrollen (26) umfassen, die an einer jeweiligen Seitenwand (18.3, 18.4) montiert sind, wobei die Führungsrollen (26) Drehachsen (Z) orthogonal zu einer Ebene des Tischs (2) haben, wobei die Führungsrollen (26) mit einem bezüglich des Tischs (2) festen Führungsrollweg (22.3) zusammenwirken, und wobei die Andrückmittel wenigstens zwei Andrückrollen (27) an jeder Seitenwand (18.3, 18.4) umfassen, wobei die Andrückrollen (27) Drehachsen (Y1) orthogonal zur Verlagerungsrichtung (X) und parallel zur Ebene des Tischs (2) haben, wobei jede Andrückrolle (27) mit einem bezüglich des Tischs (2) festen Andrückrollweg (22.4) zusammenwirkt, wobei die Andrückrollen ausschließlich zwischen dem zugeordneten Andrückrollweg und dem Tisch angeordnet sind und dazu ausgelegt sind, sich durch Entfernen und Annähern bezüglich des Andrückrollwegs zu verlagern, derart, dass das Andrückniveau durch Verlagerung der Andrückrollen in Richtung des zugeordneten Andrückrollwegs erhöht wird.

2. Anordnung nach Anspruch 1, umfassend zwei Schienen (22), die auf dem Tisch auf beiden Seiten des Verteilers (6) befestigt sind und den Andrückrollweg (22.4) und den Führungsrollweg (22.3) tragen.

3. Anordnung nach Anspruch 2, bei der jede Schiene (22) einen C-förmigen Querschnitt aufweist, dessen Öffnung zum Verteiler (6) hin orientiert ist, wobei der Querschnitt einen unteren Arm (22.1) zur Befestigung der Schiene (22) auf dem Tisch (2) und einen oberen Arm (22.2) umfasst, der den Andrückrollweg (22.4) und den Führungsrollweg (22.3) trägt.

4. Anordnung nach einem der Ansprüche 1 bis 3, umfassend Mittel (30) zur Regelung des Andrückniveaus des Verteilers auf den Tisch.

5. Anordnung nach Anspruch 4, bei der die Regelungsmittel (30) ein elastisches Mittel (50) umfassen, das in Reaktion zwischen zwei Andrückrollen (27) einer Seitenwand montiert ist, sowie ein elastisches Mittel (50), das in Reaktion zwischen den zwei Andrückrollen (27) der anderen Seitenwand montiert ist, sowie Mittel, die dazu ausgelegt sind, die Vorspannung jedes der elastischen Mittel (50) zu verändern.

6. Anordnung nach Anspruch 5, bei der jede Andrückrolle (27) drehbar an einem Teil (32, 34) angelenkt montiert ist, das drehbar an der Seitenwand (18.3, 18.4) um eine Drehachse (Y2, Y3) angelenkt montiert ist, welche parallel zur Drehachse (Y1) der Andrückrolle (27) und hiervon verschieden ist, wobei jedes elastische Mittel (50) in Anlage gegen die Teile (32, 34) montiert ist, die die Andrückrollen (27) tragen, wobei Verbindungsmittel (36) mit variabler Länge die zwei Teile (32, 34) verbinden, um die Vorspannung der elastischen Mittel (50) zu regeln.

7. Anordnung nach Anspruch 6, bei der die Verbindungsmittel (36) mit variabler Länge Gewindestangen umfassen, die die zwei Teile (32, 34) verbinden, wobei jedes elastische Mittel (50) um eine Gewindestange herum montiert ist, wobei die Gewindestangen durch Verschrauben mit den Teilen (32, 34), die die Rollen tragen, zusammenwirken.

8. Anordnung nach einem der Ansprüche 1 bis 7, bei der der Deckel (16) zwei abgeschrägte Endränder (60.1, 60.2) umfasst, wobei eine der Endwände (18.1, 18.2) des Verteilers wenigstens einen abgeschrägten Schnabel (64) umfasst, unter dem der eine der abgeschrägten Endränder des Deckels (16) aufgenommen ist, und wobei die andere Endwand einen festen Bereich und einen abnehmbaren Bereich (66) umfasst, der mit wenigstens einem abgeschrägten Schnabel (67) ausgestattet ist, welcher dazu ausgelegt ist, in Anlage gegen das andere abgeschrägte Ende des Deckels (16) zu gelangen, wobei der feste Bereich vorzugsweise Schrauben umfasst und der abnehmbare Bereich (66) mit Aussparungen ausgestattet ist, die die Schrauben empfangen.

9. Anordnung nach einem der Ansprüche 1 bis 8, bei der der Tisch (2) mehrere Gesenke (4) umfasst, und der Verteiler (6) Mittel (92, 94) zum Gruppieren des Pulvers entlang unterschiedlicher Achsen umfasst, die im Wesentlichen parallel zur Verlagerungsrichtung (X) sind, um Gesenke (4) zu füllen, wobei jedes Gesenk (4) auf einer Gruppierungsachse angeordnet ist, wobei die Gruppierungsmittel (92, 94) von Wänden (18.1, 18.2) des Gehäuses getragen werden, die orthogonal zur Verlagerungsrichtung (X) sind und in einer Ebene parallel zur Verlagerungsebene einen Sägezahnquerschnitt haben.

10. Anordnung nach Anspruch 9, umfassend stromabwärtige Gruppierungsmittel (92) und stromaufwärtige Gruppierungsmittel (94) entlang der Verlagerungsrichtung (X).

11. Anordnung nach Anspruch 10, bei der die Gesenke (4) entlang wenigstens einer Reihe (R1, R2) angeordnet sind, wobei die stromabwärtigen Gruppierungsmittel (92) transversal bezüglich der stromaufwärtigen Gruppierungsmittel (94) um eine halbe Zahnbreite versetzt sind, derart, dass eine Zahnspitze gegenüber einem Boden zwischen zwei aufeinanderfolgenden Zähnen ist, und wobei der Abstand, der die Gesenke (4) voneinander trennt, gleich dem Abstand ist, der die Böden (25) der Zähne trennt, wobei der Verteiler (6) derart auf dem Tisch (2) angeordnet ist, dass während seiner Verlagerung jeder Boden (25) zwischen zwei Zähnen ein Gesenk (4) des Tischs (2) bedeckt.

12. Vorrichtung zur Herstellung von Pastillen, umfassend eine Anordnung nach einem der Ansprüche 1 bis 11, ein Betätigungselement zur Verlagerung des Verteilers gemäß einer Hin- und Herbewegung entlang der ersten Verlagerungsrichtung (X), einen Trichter (8), der dazu ausgelegt ist, ein Pulvermaterial zu enthalten, sowie Mittel (10) zum Fördern des Pulvermaterials vom Trichter zum Verteiler, wobei das Betätigungselement vorzugsweise durch eine Kugelgelenkverbindung mit dem Verteiler (6) verbunden ist.

13. Vorrichtung zur Herstellung nach Anspruch 12, bei der die Mittel zum Fördern des Pulvermaterials wenigstens eine Leitung (10) umfassen, vorzugsweise mehrere Leitungen, die mit dem Deckel (16) und mit dem Trichter (8) verbunden ist/sind, wobei die Leitung(en) (10) einen Schlauch (71) umfasst/umfassen, der mit Metallwindungen gebildet ist, die in ein Kunststoffmaterial eingebettet sind, sowie Anschlusselemente an jedem ihrer Enden.

14. Vorrichtung zur Herstellung nach Anspruch 13, wobei die Anschlusselemente (73, 80) mit dem Deckel und mit dem Trichter mit Hilfe von Bolzen-Gelenkschellen (72, 76) verbunden sind.

15. Vorrichtung zur Herstellung nach Anspruch 14, bei der die Bolzen-Gelenkschelle (76), die mit dem einem der Anschlusselemente (80) der Leitung (10) mit dem Trichter (8) verbunden ist, an einem Bügel (86) montiert ist, der drehbar an dem Anschlusselement (80) angelenkt ist, wobei die Drehanlenkung des Bügels (86) an dem Anschlusselement (80) vorzugsweise ein Spiel entlang der Achse des Anschlusselements und ein transversales Spiel aufweist.

16. Vorrichtung zur Herstellung von Pastillen nach einem der Ansprüche 12 bis 15 für die Herstellung von Kernbrennstoffpastillen.

## Claims

1. Assembly for fabrication of pellets from a powder material comprising a powder distributor (6) and a table (2) provided with cavities, on which the distributor is capable of moving, said powder distributor comprising a casing comprising a cover (16) provided with means (62) connecting it to at least one powder supply conduit (10) connected to a hopper, two side walls (18.3, 18.4) and two end walls (18.1, 18.2), said distributor (6) being capable of moving the powder in a to and fro movement on a plane along a determined displacement direction (X), said assembly comprising means of guiding the distributor along the displacement direction and means of pressing the distributor in contact with the table, **characterized in that** in said assembly said guide means comprise at least two guide rollers (26) installed on each side wall (18.3, 18.4), said guide rollers (26) having rotation axes (Z) perpendicular to a plane of the table (2), said guide rollers (26) cooperating with a guide running track (22.3) fixed relative to the table (2), and in which said pressure means comprise at least two pressure rollers (27) on each side wall (18.3, 18.4), said pressure rollers (27) having rotation axes (Y1) perpendicular to the displacement direction (X) and parallel to the plane of the table (2), each pressure roller (27) cooperating with a pressure running track (22.4) fixed relative to the table (2), said pressure rollers being arranged only between the associated pressure running track and the table, and being capable of moving to and fro relative to the pressure running track, such that the pressure force is increased by moving the pressure rollers towards the associated pressure running track.

2. Assembly according to claim 1, comprising two rails (22) fixed to the table on each side of the distributor (6) and supporting the pressure running track (22.4) and the guide running track (22.3).

3. Assembly according to claim 2, in which each rail (22) has a C-shaped cross section open towards the distributor (6), the cross-section comprising a lower branch (22.1) for attachment of the rail (22) on the table (2) and an upper branch (22.2) supporting the pressure running track (22.4) and the guide running track (22.3).

4. Assembly according to one of claims 1 to 3, comprising means (30) of adjusting the pressure force between the distributor and the table.

5. Assembly according to claim 4, in which the adjustment means (30) comprise an elastic means (50) mounted free to react between two pressure rollers (27) on one side wall and an elastic means (50) mounted free to react between the two pressure rollers (27) on the other side wall and means capable of modifying the preload on each of the elastic means (50).

6. Assembly according to claim 5, in which each pressure roller (27) is mounted free to rotate on a part (32, 34) that is itself free to rotate on the side wall (18.3, 18.4) about an axis of rotation (Y2, Y3) parallel to the axis of rotation (Y1) of the pressure roller (27) and separate from it, each elastic means (50) being mounted bearing between the parts (32, 34) supporting the pressure rollers (27), variable length connecting means (36) connecting the two parts (32, 34) to adjust the preload on the elastic means (50).

7. Assembly according to claim 6, in which the variable length connecting means (36) comprise threaded rods connecting the two parts (32, 34), each elastic means (50) being free to rotate about a threaded rod, said threaded rods cooperating with the parts (32, 34) supporting the rollers by screwing.

8. Assembly according to one of claims 1 to 7, in which the cover (16) comprises two bevelled end edges (60.1, 60.2), one of the end walls (18.1, 18.2) of the distributor comprising at least one bevelled bill (64) under which one of the bevelled end edges of the cover (16) is located and the other end wall comprises a fixed part and a removable part (66) provided with at least one bevelled bill (67) that will bear on the other bevelled end of the cover (16), the fixed part advantageously comprising screws and the removable part (66) is provided with U-lags inside which the screws fit.

9. Assembly according to one of claims 1 to 8, in which the table (2) comprises several cavities (4) and the distributor (6) comprises means (92, 94) of grouping the powder along separate axes approximately parallel to the displacement direction (X), to fill the cavities (4), each cavity (4) being located along a grouping axis, the grouping means (92, 94) being supported by walls (18,1,18.2) of the casing perpendicular to the displacement direction (X) and having a saw tooth section along a plane parallel to the displacement plane.

10. Assembly according to claim 9, comprising downstream grouping means (92) and upstream grouping means (94) relative to the displacement direction (X).

11. Assembly according to claim 10, in which the cavities (4) are arranged in at least one row (R1, R2), in which the downstream grouping means (92) are offset transversely from the upstream grouping means (94) by a half tooth width, such that one tooth tip is facing the bottom between two consecutive teeth, and in which the distance separating the cavities (4) is equal to the distance separating the bottoms (25) of the teeth, the distributor (6) being arranged on the table (2) so that when it moves, each bottom (25) between two teeth covers a cavity (4) in the table (2).

12. Pellet fabrication device comprising an assembly according to one of claims 1 to 11, a displacement actuator conferring a to and fro movement on the distributor along the first displacement direction (X), a hopper (8) capable of containing a powder material and routing means (10) to move the powder material from the hopper to the distributor, the actuator being advantageously connected to the distributor (6) through a swivel connection.

13. Fabrication device according to claim 12, in which the powder material routing means comprise at least one conduit (10), advantageously several conduits, connected to the cover (16) and to the hopper (8), the conduit (10) comprising a pipe (71) formed from metal turns embedded in a synthetic material, and connectors to each of its ends.

14. Fabrication device according to claim 13, connectors (73, 80) being fixed to the cover and to the hopper by bolted articulated collars (72, 76).

15. Fabrication device according to claim 14, in which the bolted articulated collar (76) fixed to one of the connectors (80) connecting the conduit (10) to the hopper (8) is mounted on an articulated stirrup (86) free to rotate on said connector (80), the rotative hinge of the stirrup (86) on said connector (80) advantageously comprising a clearance along the axis of the connector and a transverse clearance.

16. Pellet fabrication device according to one of claims 12 to 15, for the fabrication of nuclear fuel pellets.
